# EUROPEAN PATENT SPECIFICATION

(11) **EP 3 003 999 B1**
(45) Date of publication and mention of the grant of the patent: **01.03.2017**
(21) Application number: 14725069.0
(22) Date of filing: 13.05.2014
(51) Int. Cl.: C03B 23/03, D03D 15/12, D03D 15/00, C23C 22/00, C22C 38/00

(54) **HEAT RESISTANT SEPARATION FABRIC**
WÄRMBESTÄNDIGER TRENNSTOFF
TISSU DE SÉPARATION RÉSISTANT À LA CHALEUR

(30) Priority: 29.05.2013 EP 13169688
(43) Date of publication of application: 13.04.2016
(73) Proprietor: NV Bekaert SA, 8550 Zwevegem (BE)
(72) Inventor: DE RIDDER, Frank, B-9308 Hofstade - Aalst (BE); LANCKMANS, Filip, B-1750 Lennik (BE); POSTHUMUS, Marcel, B-7500 Doornik (BE)
(74) Representative: Vangheluwe, Lieven Germain L.
(86) International application number: PCT/EP2014/059709
(87) International publication number: WO 2014/191193

(56) References cited:
- EP-A1- 0 502 756
- EP-A2- 0 810 304
- EP-A2- 2 567 945
- JP-A- 2001 164 442
- US-A- 5 607 520
- YANG X ET AL: "Corrosion of 434 stainless fibres in hydrochloric acid", 2013 INTERNATIONAL CONFERENCE ON MACHINERY, MATERIALS SCIENCE AND ENERGY ENGINEERING : SELECTED, PEER REVIEWED PAPERS FROM THE 2013 INTERNATIONAL CONFERENCE ON MACHINERY, MATERIALS SCIENCE AND ENERGY ENGINEERING (ICMMSEE 2013), MAY 18-19, 2013, JINGZ, vol. 318, 18 May 2013 (2013-05-18), pages 312-315, XP009171791, ISBN: 978-3-03785-702-1
- R. ROBIN ET AL: "Correlation between composition of passive layer and corrosion behavior of high Si-containing austenitic stainless steels in nitric acid", JOURNAL OF NUCLEAR MATERIALS, vol. 375, no. 1, 1 March 2008 (2008-03-01) , pages 65-71, XP055122934, ISSN: 0022-3115, DOI: 10.1016/j.jnucmat.2007.10.016

## Description

### Technical Field

The invention relates to the field of heat resistant separation fabrics such as can be used in the production of car glass. The heat resistant separation fabrics of the invention comprise stainless steel fibers. Such fabrics can be used to cover moulds, rings and transport rollers (e.g. in the car glass industry) to avoid direct contact between the moulds, rings and transport rollers and the hot glass panels or products.

### Background Art

Heat resistant separation fabrics that comprise stainless steel fibers are known (see e.g. in WO00/40792 and in WO2011/117048). Such fabrics are e.g. used in the production of car glass (so called lites) to avoid direct contact between tooling (moulds, rings, rollers) and the hot glass. The fabrics can consist for 100% of stainless steel fibers (e.g. in JP2001164442A2), or can be blends of stainless steel fibers with other fibers (e.g. in WO99/47738A1), e.g. with glass fiber or with poly(p-phenylene-2, 6-benzobisoxazole) fibers (see for the latter in WO00/61508A1). Fabrics comprising stainless steel fibers have the benefit that they have a long life time and good temperature resistance.

It is a problem of the steel fiber comprising heat resistant separation fabrics of the prior art that such fabrics need a running in time when used for the first time. After mounting a new heat resistant separation fabric on the mould, a first series of lites (car glass panels) made with it are not of optimum quality and frequently need to be thrown away.

### Disclosure of Invention

It is an objective of the invention to provide an improved heat resistant separation fabric that comprises stainless steel fibers. It is a specific objective of the invention to provide such fabrics that allow to improve the quality (and especially the optical quality) of glass products (e.g. car glass products) when starting up production with heat resistant separation fabrics covering tooling such as moulds, rollers or rings.

The first aspect of the invention is a heat resistant separation fabric comprising stainless steel fibers. The stainless steel fibers are made out of an alloy comprising more than 12% (and preferably more than 18%) by weight of chromium. The stainless steel fibers comprise an oxide skin, wherein the atomic percentage of Cr at 5 nm depth of the oxide skin divided by the sum of the atomic percentages of Cr and Fe at 5 nm depth of said oxide skin, and multiplied with 100 to express as a percentage, is higher than 30%, preferably higher than 40%.

The atomic percentage of the elements Cr and Fe at a specified depth of the oxide skin (meant is the depth from the surface of the oxide skin layer of the stainless steel fibers) can be determined by means of XPS (X-ray Photoelectron Spectroscopy), using sputtering to measure element composition at different depths.

Surprisingly, the fabrics of the invention - even where the oxide skin is covering the complete surface of the stainless steel fibers and where the oxide skin is rather thick - are sufficiently flexible in that the fabrics can even be draped easily on double curved moulds. When using the heat resistant separation fabrics of the invention as covering of tooling (e.g. moulds, rollers or rings) in car glass production, the quality of the car glass at start-up with new coverings is improved to a large extent. This is especially important when small series of car glass products have to be made, as it can lead to frequent changes of tooling coverings. In such cases, the lifetime of the tooling covering is of lesser importance; however, it is beneficial that as from start-up of production with new covering, good quality car glass products are produced.

In preferred embodiments, the stainless steel fibers are made out of an austenitic stainless steel alloy.

Preferably the stainless steel fibers comprise more than 16 % by weight of chromium, and preferably less than 28% by weight of chromium.

Preferably, the alloy comprises more than 6% by weight of nickel, more preferably more than 15% by weight of nickel. Preferably, the alloy comprises less than 25 % by weight of nickel.

E.g. stainless steel fibers made out of an alloy of the 300 series of ASTM A313 can be advantageously used for the invention. Preferred examples of alloys for the invention are 316, 316L and 347 (according to ASTM A313).

Preferably the equivalent diameter of the stainless steel fibers is larger than 4 µm, preferably larger than 6 µm.

Preferably, the equivalent diameter of the stainless steel fibers is smaller than 25 µm, preferably smaller than 20 µm, more preferably smaller than 15 µm.

Examples of equivalent fiber diameters that can advantageously be used are 6.5 µm, 8 µm, 12 µm and 22 µm.

With equivalent diameter is meant the diameter of a circle that has the same surface area as the surface area of the cross section of a fiber, which is not necessarily having a circular cross section.

Preferably, the stainless steel fibers are made via bundled drawing.

Preferably, the stainless steel fibers are of discrete length (e.g. fibers obtained via stretch breaking of bundle drawn fiber bundles) and spun into a yarn.

Preferably the heat resistant separation fabric comprises stainless steel fibers in two-ply or three-ply yarns.

In a preferred embodiment, the stainless steel fibers have in the oxide skin an atomic percentage of Cr divided by the sum of the atomic percentages of Cr and Fe of the oxide skin, and multiplied with 100, higher than 30%, preferably higher than 40%, from the surface till minimum at a depth of 25 nm (and preferably till minimum at a depth of 40 nm, and more preferably till minimum at a depth of 60 nm) from the fiber surface. Heat resistant separation fabrics according to such embodiments have even better start-up behavior when used as covering for tooling that comes in contact with hot glass products.

In a preferred embodiment, the oxide skin covers the complete surface of the stainless steel fibers. The complete coverage of the full surface of the stainless steel fibers by the oxide skin reinforces the start-up benefits of the heat resistant separation fabric.

In a preferred embodiment, the potential range of the current plateau of the heat resistant separation material as measured in cyclic potentiodynamic polarization is at least 0.18 V.

Cyclic potentiodynamic polarization is a test that can be performed to evaluate whether or not the full surface of the stainless steel fibers of the heat resistant fabric of the invention is covered by an oxide skin. The preferred minimum value for the potential range of the current plateau is an indication of full coverage of the stainless steel fibers by the oxide skin, and contributing to improved beneficial start-up behaviour of the heat resistant separation material.

Cyclic potentiodynamic polarization (CCP) is an electrochemical technique that is a fairly simple routine technique in laboratories specialized in electrochemistry. This technique is based on potentiodynamic anodic measurements as described in the standards ASTM G5-94(2004) and ASTM G61-86(2009). In the test, a voltage is applied between the sample, used as working electrode, and an inert counter electrode (e.g. carbon, gold or platinum electrode). The voltage is consecutively increased with a constant increment resulting in a scan rate expressed in Volt per minute or Volt per second. When the voltage is applied to the sample the current between the sample and an inert counter electrode is recorded. The potential is ramped at a continuous, often slow rate relative to a reference electrode using an instrument called a potentiostat. Traditionally, the potential is first increased at a constant rate (forward scan). The scan direction is reversed at some chosen maximum current or voltage and progresses at the same rate in the backward or reverse direction. The scan is terminated at another chosen voltage. During the test, the electrical current is measured. A plot can be made of the relation between the applied voltage and the logarithm of the electrical current that is measured.

The voltage measurement is compared to the Standard Hydrogen Electrode (SHE) as described in the IUPAC Compendium of Chemical Terminology, 2nd ed. (the "Gold Book"), compiled by A. D. McNaught and A. Wilkinson. Blackwell Scientific Publications, Oxford (1997). XML on-line corrected version http://goldbook.iupac.org/S05917.html. For practical use however a standardized lab reference electrode like a calomel (SCE) or silver / silver chloride (Ag/AgCl) electrode may be used.

For the tests performed in the framework of the invention the standards ASTM G5-94(2004) and ASTM G61-86(2009) are followed. For the test the electrolyte in which the electrodes are immersed contains 5% by weight of NaCl in a 40/60 by volume of water / ethanol mixture. Ethanol is used in the electrolyte in order to assure complete wetting of the sample material, as incomplete wetting of the material would result in an errorteous measurement of the voltage. The pH of the electrolyte is adjusted to 2 using HCl. As reference electrode Ag/AgCl (0.22 V versus Standard Hydrogen Electrode (SHE)) is used. The scan rate used in the tests is 5 mV/s. Potential values are compared to the Standard Hydrogen Electrode (SHE) electrode.

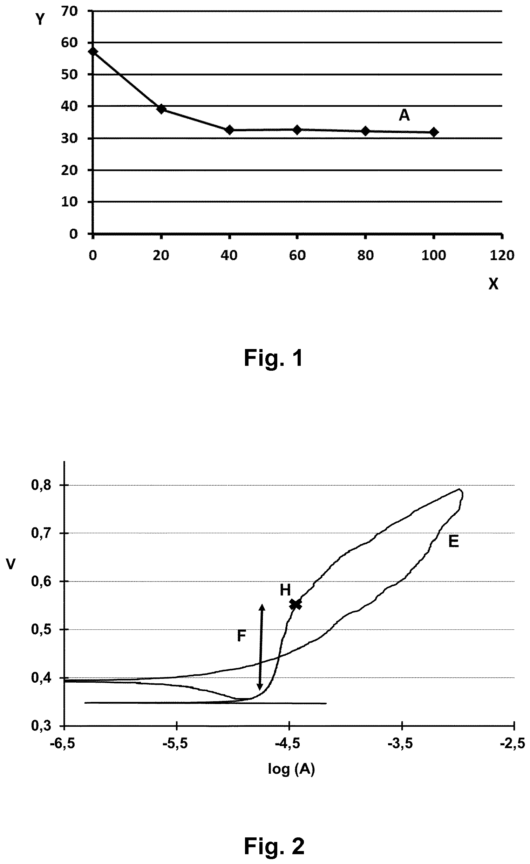

The potential range of the current plateau is the range of the potential in the first part of the potential versus the logarithm of the current that shows a linear relationship (as defined between the two points of inflection) between the potential and the logarithm of het current. The current plateau is described as "passive region" in fig. 4, in ASTM G3-89 (2010)). The range of the potential of the current plateau for fabrics of the invention is illustrated in figure 2 of this patent application (indicated with F in figure 2) and is measured between the two points of inflection.

The breakdown potential is the potential at the end of the current plateau, where the potential versus the logarithm of the current shows a point of inflection. The breakdown potential is illustrated in figure 2 (indicated with H).

In a preferred embodiment, the breakdown potential of the heat resistant separation material as measured in cyclic potentiodynamic polarization is higher than 0.55 V, preferably higher than 0.60 V, compared to the Standard Hydrogen Electrode (SHE) electrode. The preferred minimum values for the breakdown potential are an indication of full coverage of the stainless steel fibers by the oxide skin, and contributing to improved beneficial start-up behaviour of the heat resistant separation material.

In a preferred embodiment of the invention, the heat resistant separation fabric consists out of stainless steel fibers.

In an embodiment of the invention, the heat resistant separation fabric comprises more than one fiber type, e.g. stainless steel fibers and glass fibers or poly(p-phenylene-2, 6-benzobisoxazole) fibers (PBO fibers). The blend can be made as an intimate blend and spinning yarns out of the blended fibers, or yarns out of one fiber type can be combined via plying, or different yarn types can be combined when producing the fabric, e.g. via knitting, weaving or braiding.

The treatment of the stainless steel fibers to create the oxide skin can be performed on stainless steel fibers as such, or on spun yarns comprising or consisting out of stainless steel fibers, or on fabrics.

When the fabric comprises fibers that are not stainless steel fibers, preferably the stainless steel fibers are treated to create the oxide skin layer in a form in which only stainless steel fibers (and no other fibers) are present, e.g. in fiber form or in the form of yarns consisting out of stainless steel fibers.

The heat resistant separation material of the invention can e.g. be a knitted fabric, a woven fabric, a braided fabric or a felt. A felt is a nonwoven fabric comprising stainless steel fibers.

A specific embodiment of the invention is a heat resistant separation fabric that is a sleeve, e.g. a tubular sleeve, e.g. a knitted sleeve, e.g. a circular knitted sleeve, e.g. a braided sleeve. Such sleeves can e.g. be used as covering for rollers transporting glass panels and lites in car glass manufacturing. It has surprisingly been observed that the sleeves according to the invention were solving - additionally to the improved quality of glass panels at start up - the slippage problem that occurred on prior art sleeves. The glass panels are transported on the rollers that are driven. Subsequent rollers have a higher speed and are thus accelerating the car glass panels. With prior art sleeves, it was observed that slippage could occur between the rollers and the car glass panel, resulting in incorrect transport of the glass panel. The sleeves according to the invention showed to solve this problem as substantially no slippage occurs between the roller and the car glass.

A specific embodiment of the invention is a heat resistant separation fabric according to the invention that is a press mould covering or a quench ring covering.

A method for the production of a heat resistant separation fabric as in the first aspect of the invention, comprises the treatment of stainless steel fibers made out of an alloy comprising more than 12 % by weight of chromium (and preferably more than 18% by weight of chromium), in fiber, yarn or fabric form, in an acid, in order to build an oxide skin on said stainless steel fibers, wherein in the oxide skin the atomic percentage of Cr at 5 nm depth of said oxide skin divided by the sum of the atomic percentages of Cr and Fe at 5 nm depth of said oxide skin, and multiplied with 100 to express the result as a percentage, is higher than 30%, preferably higher than 40%. The stainless steel fibers are e.g. made out of an alloy of the 300 series of ASTM A313.

Preferably, a heat resistant separation material comprising stainless steel fibers, or a yarn comprising stainless steel fibers or the stainless steel fibers themselves are treated in nitric acid, preferably at a temperature of at least 50 °C.

An acid comprising nitric acid can be used in the method. Preferably, when nitric acid is used, the concentration of nitric acid in the treatment is at least 20 % by volume, more preferably at least 30 % by volume, and preferably less than 50% by volume in water.

Preferably, the treatment in acid is performed during a period of at least 1 hour, more preferably during a period of at least 1.5 hours, more preferably at least 2 hours, even more preferably at least 2 hours and preferably below 4 hours.

The method can be performed on stainless steel fibers, or on yarns comprising or consisting out of stainless steel fibers, or on fabrics comprising or consisting out of stainless steel fibers.

Another aspect of the invention is the use of a heat resistant separation fabric of the first aspect of the invention as covering of tooling that comes in contact with hot glass products in glass products manufacturing, in order to improve the quality of the glass products when starting glass products manufacturing with new covering. Such products could be car glass products or hollow glass products (e.g. bottles).

### Brief Description of Figures in the Drawings

Figure 1 shows the percentage Cr/ (Cr + Fe) over the depth from the surface of the stainless steel fibers for an example of the invention.
Figure 2 shows a CPP curve of an example of the invention.

### Mode(s) for Carrying Out the Invention

A first example of a heat resistant separation material according to the invention is a weft knitted mould covering fabric consisting out of stainless steel fibers of diameter 12 µm out of stainless steel alloy 316L, spun into yarns of Nm 11/2. The fabric has a specific weight of 950 g/m².

A second example of a heat resistant separation material according to the invention is a circular weft knitted tubular sleeve of diameter 60 mm (in unstretched state) consisting out of stainless steel fibers of diameter 12 µm out of stainless steel alloy 347, spun into yarns of Nm 11/2. The sleeve has a specific weight of 136 g/m².

The fabrics according to the invention were treated in an aqueous solution of 30 % by volume of nitric acid during a time period of one hour at a temperature of 50°C. Afterwards, the fabric was neutralized, rinsed and dried.

Figure 1 shows the percentage of atomic Cr over the sum of the atomic percentages of Cr and Fe over the depth from the surface of the stainless steel fibers for an example of the invention (curve A). The test results have been obtained using XPS. In horizontal axis (X) the depth in nanometer from the stainless steel fiber surface (which obviously coincides with the surface of the oxide layer) is shown. The Y-axis shows the atomic percentage of Cr divided by the sum of the atomic percentages of Cr and Fe, and multiplied with 100, to express the result as a percentage. Curve A shows the result as a function of the depth from the surface of the stainless steel fiber. In the sample tested and shown in figure 1, at the surface of the stainless steel fiber (which is also the surface of the oxide skin on the stainless steel fiber) the atomic percentage of Cr is 14.5%, while the atomic percentage of Fe is 10.9%, resulting in Cr/(Cr + Fe)*100 of 57.08%.

Figure 2 shows a cyclic potentiodynamic polarization (CPP) curve for an example of heat resistant separation fabric according to the invention. The vertical axis V indicates the potential (in Volt) relative to an SHE-electrode (Standard Hydrogen Electrode). The horizontal axis log (A) indicates the logarithm of the measured electrical current in Ampere. E represents the measured CPP curve of the sample. F is the potential range of the current plateau (measured from inflection point to inflection point), and H is the breakdown potential. In the example shown (figure 2) the potential range of the current plateau is 0.19 V and the breakdown potential is 0.56 V.

Another example of the invention, made with a treatment time of two hours in the acid solution, showed a potential range of the current plateau of 0.20 V and a breakdown potential of 0.61 V.

Trials in car glass production with the exemplary sleeves as roller covering have shown an important improvement of quality of the car glass (lites) produced when starting up with new sleeves. With prior art sleeves, quality of the first lites was not good, lites had to be thrown away frequently because of markings and/or imprints in the lites or because of an unwanted contamination of the lites. The contamination sometimes appeared as a haze on the glass in which the imprint of the tool covering fabric could be distinguished. The contamination could sometimes be removed by means of brushing or polishing, however, this is an extra step that requires extra labour and cost. The sleeves according to the invention did not show the contamination on the lites and provided improved quality of lites at start-up.

Furthermore, the slippage problem between covered rollers and glass panels that was observed with prior art sleeves did not occur when using sleeves according to the invention as roller covering.

## Claims

1. Heat resistant separation fabric comprising stainless steel fibers,
- wherein said stainless steel fibers are made out of an alloy comprising more than 12 % by weight of chromium;
- wherein said stainless steel fibers comprise an oxide skin;
**characterised in that** the atomic percentage of Cr at 5 nm depth of said oxide skin divided by the sum of the atomic percentages of Cr and Fe at 5 nm depth of said oxide skin, and multiplied with 100, is higher than 30%.

2. Heat resistant separation fabric as in claim 1, wherein in said oxide skin the atomic percentage of Cr divided by the sum of the atomic percentages of Cr and Fe, and multiplied with 100, is higher than 30% from the surface till minimum at a depth of 25 nm.

3. Heat resistant separation fabric as in claims 1 or 2, wherein said oxide skin covers the complete surface of said stainless steel fibers.

4. Heat resistant separation fabric as in any of the preceding claims, wherein the potential range of the current plateau as measured in cyclic potentiodynamic polarization is at least 0.18V.

5. Heat resistant separation fabric as in any of the preceding claims, wherein the breakdown potential as measured in cyclic potentiodynamic polarization is, compared to the Standard Hydrogen Electrode, higher than 0.55 V.

6. Heat resistant separation fabric as in any of the preceding claims, wherein said heat resistant separation fabric consists out of stainless steel fibers.

7. Heat resistant separation fabric as in any of the preceding claims, wherein the heat resistant separation fabric is a sleeve.

8. Heat resistant separation fabric as in claims 1 - 6, wherein the heat resistant separation fabric is a press mould covering or a quench ring covering.

9. Use of a heat resistant separation material as in claims 1 - 8, as covering of tooling that comes in contact with hot glass products in glass products production, in order to improve the quality of the glass products when starting glass products production with new covering.

## Patentansprüche

1. Wärmebeständiges Trenngewebe, umfassend Fasern aus rostfreiem Stahl,
- wobei die Fasern aus rostfreiem Stahl aus einer Legierung bestehen, die mehr als 12 Gew.-% Chrom umfasst;
- wobei die Fasern aus rostfreiem Stahl eine Oxidhaut umfassen;
**dadurch gekennzeichnet, dass** die Atomprozent an Cr in 5 nm Tiefe der Oxidhaut geteilt durch die Summe der Atomprozent an Cr und Fe in 5 nm Tiefe der Oxidhaut und multipliziert mit 100 größer als 30 % sind.

2. Wärmebeständiges Trenngewebe gemäß Anspruch 1, wobei in der Oxidhaut die Atomprozent an Cr geteilt durch die Summe der Atomprozent an Cr und Fe und multipliziert mit 100 größer als 30 % an der Oberfläche und minimal in einer Tiefe von 25 nm sind.

3. Wärmebeständiges Trenngewebe gemäß Ansprüchen 1 oder 2, wobei die Oxidhaut die gesamte Oberfläche der Fasern aus rostfreiem Stahl bedeckt.

4. Wärmebeständiges Trenngewebe gemäß einem der vorstehenden Ansprüche, wobei der Potentialbereich des Stromplateaus, wie gemessen durch zyklische potentiodynamische Polarisation, wenigstens 0,18 V beträgt.

5. Wärmebeständiges Trenngewebe gemäß einem der vorstehenden Ansprüche, wobei das Durchbruchpotential, wie gemessen durch zyklische potentiodynamische Polarisation, im Vergleich zu der Standard-Wasserstoffelektrode höher als 0,55 V ist.

6. Wärmebeständiges Trenngewebe gemäß einem der vorstehenden Ansprüche, wobei das wärmebeständige Trenngewebe aus Fasern aus rostfreiem Stahl besteht.

7. Wärmebeständiges Trenngewebe gemäß einem der vorstehenden Ansprüche, wobei das wärmebeständige Trenngewebe eine Hülse ist.

8. Wärmebeständiges Trenngewebe gemäß einem der Ansprüche 1-6, wobei das wärmebeständige Trenngewebe eine Pressformabdeckung oder eine Quenchringabdeckung ist.

9. Verwendung eines wärmebeständigen Trennmaterials gemäß Ansprüchen 1-8 als Abdeckung von Werkzeug, das bei der Glasprodukt-Herstellung in Kontakt mit heißen Glasprodukten kommt, um die Qualität der Glasprodukte zu verbessern, indem die Glasprodukt-Herstellung mit einer neuen Abdeckung begonnen wird.

## Revendications

1. Tissu de séparation résistant à la chaleur comprenant des fibres d'acier inoxydable,
- dans lequel lesdites fibres d'acier inoxydable se composent d'un alliage comprenant plus de 12 % en poids de chrome ;
- dans lequel lesdites fibres d'acier inoxydable comprennent une pellicule d'oxyde ;
**caractérisé en ce que** le pourcentage atomique de Cr à 5 nm de profondeur de ladite pellicule d'oxyde divisé par la somme des pourcentages atomiques de Cr et de Fe à 5 nm de profondeur de ladite pellicule d'oxyde, et multiplié par 100, est supérieur à 30 %.

2. Tissu de séparation résistant à la chaleur selon la revendication 1, dans lequel, dans ladite pellicule d'oxyde, le pourcentage atomique de Cr divisé par la somme des pourcentages atomiques de Cr et de Fe, et multiplié par 100, est supérieur à 30 % à partir de la surface jusqu'à un minimum à une profondeur de 25 nm.

3. Tissu de séparation résistant à la chaleur selon les revendications 1 ou 2, dans lequel ladite pellicule d'oxyde couvre toute la surface desdites fibres d'acier inoxydable.

4. Tissu de séparation résistant à la chaleur selon l'une quelconque des revendications précédentes, dans lequel la plage de potentiel du plateau de courant, telle que mesurée par polarisation potentiodynamique cyclique, est d'au moins 0,18 V.

5. Tissu de séparation résistant à la chaleur selon l'une quelconque des revendications précédentes, dans lequel le potentiel de claquage, tel que mesuré par polarisation potentiodynamique cyclique est, relativement à l'Électrode standard à hydrogène, supérieur à 0,55 V.

6. Tissu de séparation résistant à la chaleur selon l'une quelconque des revendications précédentes, ledit tissu de séparation résistant à la chaleur étant constitué de fibres d'acier inoxydable.

7. Tissu de séparation résistant à la chaleur selon l'une quelconque des revendications précédentes, le tissu de séparation résistant à la chaleur étant un manchon.

8. Tissu de séparation résistant à la chaleur selon les revendications 1 à 6, le tissu de séparation résistant à la chaleur étant un revêtement de moule de moulage par compression ou un revêtement d'anneau de trempe.

9. Utilisation d'un matériau de séparation résistant à la chaleur selon les revendications 1 à 8, comme revêtement d'un outillage qui entre en contact avec des produits en verre chauds dans la fabrication de produits en verre, afin d'améliorer la qualité des produits en verre quand on commence à fabriquer des produits en verre avec le nouveau revêtement.
